Europäisches Patentamt

(19) European Patent Office

Office européen des brevets

(11) Veröffentlichungsnummer: **0 216 287**
**B1**

(12) **EUROPÄISCHE PATENTSCHRIFT**

(45) Veröffentlichungstag der Patentschrift:
07.12.88

(51) Int. Cl.⁴: **G 03 B 42/04**

(21) Anmeldenummer: **86112719.9**

(22) Anmeldetag: **15.09.86**

(54) **Automatisch be- und entladbare Röntgenfilmkassette und hierfür geeignetes Röntgenkassettenbe- und -entladegerät.**

(30) Priorität: **24.09.85 DE 3533953**

(43) Veröffentlichungstag der Anmeldung:
**01.04.87 Patentblatt 87/14**

(45) Bekanntmachung des Hinweises auf die Patenterteilung:
**07.12.88 Patentblatt 88/49**

(84) Benannte Vertragsstaaten:
**DE FR IT**

(56) Entgegenhaltungen:
**EP-A- 0 110 292**
**DE-A- 3 232 187**
**DE-B- 2 327 385**
**DE-B- 2 412 802**
**DE-C- 3 147 956**
**DE-C- 3 232 148**

(73) Patentinhaber: **Agfa-Gevaert AG, Patentabteilung,
D-5090 Leverkusen 1 (DE)**

(72) Erfinder: **Schmidt, Manfred, Dipl.-Ing., Ligusterweg 34,
D-8011 Kirchheim (DE)**
Erfinder: **Gebele, Herbert, Dipl.-Ing., Scheicherweg 17,
D-8029 Sauerlach (DE)**

**Beschreibung**

Die Erfindung betrifft eine für die automatische Be- und Endladung in einem Röntgenkassettenbe- und -entladegerät geeignete Röntgenfilmkassette, die auf einer ihrer Flachseiten Angaben über die Kassette und/oder den in ihr vorzusehenden oder vorgesehenen Blattfilm enthaltenden Strichcode in Form eines Labels aufweist, und für deren Be- und Entladung geeignetes Röntgenkassettenbe- und -entladegerät, in dem Kassetten unterschiedlicher Formate je lagemässig bezüglich der Eingaberichtung der Kassetten an derselben stirnseitigen Kassettenecke bzw. zentriert zur Mittellinie in Anschlag bringbar sind.

Röntgenkassettenbe- und -entladegeräte dieser Art sind beispielsweise durch die DE-PS 3 232 148 bekannt.

Dabei ist die Bestimmung des Formats einer jeweils eingegebenen Kassette und damit die Auswahl eines neu in die Kassette einzuführenden Filmblattes relativ kompliziert.

In der europäischen Patentanmeldung 86 112 720.7 (EP-A 0 079 557) ist vorgeschlagen, Speicherfolien oder Röntgenfilm im Bereich eines zu öffnenden Kassetteneinbelichtungsfensters mit Strichcodes oder Montagecodes zum automatischen Lesen von die Speicherfolie betreffenden Informationen zu versehen. Durch die DE-PS 3 147 956 ist ausserdem die Anbringung eines löschbaren Strichcodes oder Magnetcodes oder elektrischen Codes auf dem Deckel einer Röntgenfilmkassette zur Kontrolle einer beabsichtigten Mehrfachbelichtung bekannt. Will man einen derartigen bekannten Code für die Angabe des Kassetten- oder Filmformats verwenden und in einem Be- und Entladegerät automatisch lesen, so besteht die Schwierigkeit, dass in ein Be- und Entladegerät Kassetten ganz verschiedener Formate eingegeben werden. Die grossen Kassetten werden dabei infolge ihrer Grösse im Eingabeschacht so gut geführt, dass sie etwa parallel zur Transportrichtung des Gerätes bewegt werden. Hier würde das Hindurchführen eines Codes auf der Kassette unter einem geräteseitigen automatischen Leser keine Schwierigkeiten bereiten. Je kleiner jedoch eine eingegebene Kassette ist, umso mehr besteht die Möglichkeit, sie irgendwie, z.B. völlig schief gegenüber der Transportrichtung, einzugeben. Somit bestünde hier die Wahrscheinlichkeit, dass bis zum Erreichen der ausgerichteten Endlage einer derartigen kleinen Kassette nur ein Teil des Codes unter dem automatischen Leser hindurchgeführt wird und dann infolge eines falschen Leseergebnisses die automatische Filmauswahl des neu einzugebenden Films versagt.

Der Erfindung liegt daher die Aufgabe zugrunde, einen Code, insbesondere für das Film- bzw. Kassettenformat, so auszubilden und auf den Kassetten anzubringen und in einem Be- und Entladegerät einen automatischen Leser so auszubilden, dass der Code auch bei kleineren und kleinen, schief in das Gerät eingegebenen Kassetten vollständig erfasst und gelesen wird.

Diese Aufgabe wird erfindungsgemäss gelöst durch die Merkmale des Hauptanspruchs. Weitere vorteilhafte Merkmale der Erfindung sind den Unteransprüchen entnehmbar.

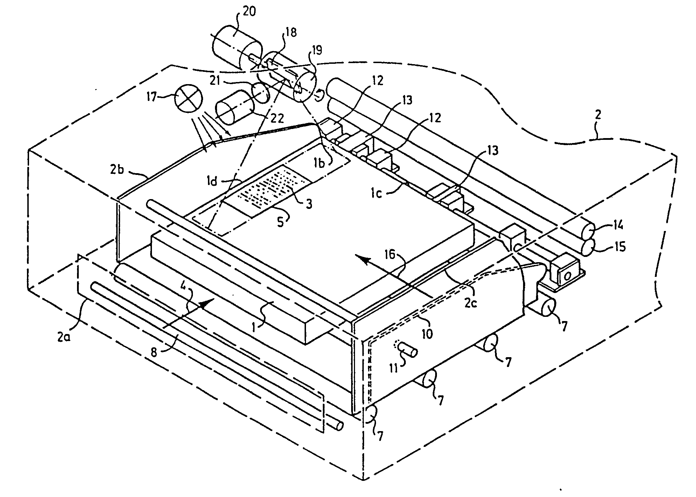

Die Erfindung wird anhand einer Zeichnung näher erläutert. Die einzige Figur zeigt eine perspektivische Darstellung von Teilen eines erfindungsgemässen Röntgenkassettenbe- und -entladegerätes bei abgenommenem Gehäuse und einer in dem Gerät an ihre Anschlaglage gebrachten Röntgenfilmkassette mit einem erfindungsgemässen Code.

In der Figur ist eine Röntgenblattfilmkassette mittlerer Grösse mit 1 bezeichnet. Da es auf Einzelheiten der Kassette 1 hierbei nicht ankommt, ist sie nur schematisch dargestellt. Sie kann in bekannter Weise aus einem Boden- und einem Deckelteil bestehen, wobei die Verriegelungsmittel für den Deckel so ausgebildet sind, dass sie in einem Röntgenkassettenbe- und -entladegerät 2 automatisch geöffnet werden kann. In einem derartigen, an sich bekannten Gerät 2 können Kassetten 1 verschiedener Formate bearbeitet werden. Dabei werden die in einer Kassette 1 enthaltenen, belichteten Blattfilme entnommen und entsprechend der im Gerät erfolgten Bestimmung der Kassettengrösse wird automatisch ein neuer Blattfilm des entsprechenden Formats in die Kassette 1 eingegegen und die Kassette nach dem Verschliessen wieder aus dem Gerät 2 ausgegeben. Um nun die Formatbestimmung im Gerät 2 zu vereinfachen, ist auf einer Kassettenflachseite 1a, vorzugsweise der beim Eingeben in das Gerät oben liegenden Flachseite, ein Strichcode 3 aufgebracht, der Angaben über die Kassette 1, vorzugsweise über die Kassettengrösse bzw. die Grösse des einzugebenden neuen Blattfilms enthält. Falls für jeweils ein Kassettenformat mehrere Filmsorten zur Verfügung stehen, z.B. für normale und für Mammografieaufnahmen, kann im Code 3 auch noch eine Angabe über die einzugebende Filmsorte enthalten sein. Der Code 3 hat für alle Kassettenformate die gleiche Lage bezüglich einer in dem Gerät 2 in Anschlag bringbaren Kassettenecke 1b. Im vorliegenden Fall ist dies die in Eingaberichtung 4 linke, vordere Ecke. Die Codes 3 für verschiedene Kassetten 1 sind also untereinander gleich gross und haben von den jeweiligen Kassettenstirnseiten 1c untereinander gleiche Abstände sowie auch von den mit der Kassettenstirnseite 1c die Ecke 1b bildenden Längsseiten 1d ebenfalls untereinander gleiche Abstände.

Würde der Code nun eine bestimmte Streifenform haben und die Striche des Codes parallel zu einer Kassettenseite 1c oder 1d verlaufen, dann würde es häufig vorkommen, wenn kleinere Kassetten 1 schief in das Gerät 2 eingegeben werden und erst bei Erreichen ihrer Endlage ausgerichtet, d.h. mit ihrer Kassettenecke 1b in Endanschlag im Gerät 2 gebracht werden, dass der Code nicht vollständig unter einem fest im Gerät 2 angeordneten automatischen Leser für den Code durchgefahren wird, so dass der Leser dann ein falsches Ergebnis lesen und das Gerät 2 falsch steuern würde.

Gemäss dem gezeigten Ausführungsbeispiel verläuft das den Strichcode 3 enthaltende Label 5 parallel zur Kante 1d, während die einzelnen Striche des Strichcodes 3 rechtwinkelig zur Kante 1d verlaufen. Bei Kassetten 1 unterschiedlichen Formats ist die Lage des Strichcodes 3 von der Anschlagecke 1b im-

mer dieselbe, während sich der Strichcode 3 unterscheidet. Damit nun Lesefehler vermieden werden, wird das Label 5 erst nach Erreichen der Anschlaglage einer Kassette im Gerät 2 automatisch gelesen, und zwar nicht mehr mit einer feststehenden Vorrichtung. Vielmehr wird das Label nach Erreichen der Anschlaglage der Kassette 1 mittels einer Beleuchtungseinrichtung 17 von oben beleuchtet. Die Beleuchtungseinrichtung strahlt Licht ab, für das das in der Kassette 1 enthaltene oder vorzusehende Filmmaterial unempfindlich ist. Das Label 5 wird seiner Länge nach durch einen ebenen Drehspiegel 18 abgetastet, der auf einem Zylinder 19 angeordnet sein kann, welcher seinerseits durch einen koaxial gelagerten Elektromotor 20 gedreht wird. Der Spiegel 18 tastet also einen zu lesenden Strichcode 3 zeilenweise ab. Im Weg der vom Drehspiegel 18 reflektierten Strahlen sind dann die Optik 21 für einen automatischen Leser 22 und dieser selbst angeordnet.

Von einem für das automatische Lesen einer erfindungsgemässe Strichcodeanordnung 3 auf Röntgenfilmkassetten 1 geeigneten Kassettenbe- und -entladegerät ist das Gehäuse 2 weggelassen und nur strichpunktiert angedeutet. Da es für die vorliegende Erfindung nicht darauf ankommt, sind auch die übrigen Geräteile, die zum besseren Verständnis erforderlich sind, nur schematisch angegeben. Die Vorrichtung zum Entnehmen eines Filmblattes aus einer eingegebenen Kassette und zum Weiterleiten desselben in eine Entwicklungsvorrichtung, die Dispensermagazine für die neuen Röntgenfilme der verschiedenen Grössen und die Beladevorrichtung sind, weil in diesem Zusammenhand unwesentlich, völlig weggelassen worden. Das Gehäuse 2 weist einen Ein- und Ausgabeschacht 2a für die Filmkassetten 1 auf, der vor und nach der Eingabe einer Kassette 1 auf bekannte Weise lichtdicht verschliessbar bzw. verschlossen ist. Der Schacht 2a ist seitlich durch in Kassettentransportrichtung 4 verlaufende Wände 2b, 2c begrenzt. Der Transport einer Kassette 1 erfolgt auf bekante Weise durch Transportwalzen 7, denen eine Schaltwalze 8 zum Einschalten des Walzenantriebs bei Auflegen einer Kassette 1 vorgeschaltet sein kann. Der Antrieb für die Walzen 7 oder andere Transportmittel für die Kassette 1 kann auf jede bekannte Weise ein- und bei Erreichen der Anschlaglage einer Kassette ausschaltbar sein. Innerhalb der Wand 2b befindet sich auf der rechten Seite eine zu den Wänden parallele Schubfläche 10, die längs einer Führungsstange 11 quer zur Einschubrichtung 4 verschiebbar ist. Stirnseitig in Einschubrichtung 4 können verschiedene vorbekannte Vorrichtungen 12 zum Stillsetzen einer Kassette 1 in einer ersten Anschlaglage, eine Vorrichtung 13 zum Öffnen der Kassette sowie auch Transportwalzen 14, 15 zum Abtransportieren eines einer Kassette entnommenen Filmblattes und Zuführen eines neuen Filmblattes vorgesehen sein. Es ist auch möglich, in bekannter Weise die Kassette nach Erreichen der gezeigten ersten Anschlagstellung zum Öffnen, zum Entnehmen des Films und zum Zuführen des neuen Films schrittweise weiterzutransportieren. Da im Zusammenhang mit der Strichcodeanordnung 3 nur die erste Anschlagstellung interessant ist, wird die Vorrichtung insoweit beschrieben.

Wenn eine Kassette 1 in Transportrichtung 4 stirnseitig bis zur gezeigten ersten Anschlagstellung bewegt ist, wird die Schubfläche 10 in Pfeilrichtung 16 angetrieben und schiebt die Kassette gegen die Anschlagfläche, so dass die linke, stirnseitige Kassettenecke 1b zusammen mit den Kassettenkanten 1c, 1d fixiert ist. Damit nehmen bei allen Kassetten 1 der verschiedenen Formate die Ecke 1b, die Kanten 1c, 1d und das Label 5 dieselbe Stellung ein. Wie bereits erläutert, sind ein Drehspiegel 18, eine Optik 21 und ein Leser 22 für Strichcodes derart angeordnet, dass sie etwa senkrecht über dem Label 5 liegen. Seitlich davon ist die Beleuchtung 17 vorgesehen, die Licht ausstrahlt, für das der zu wechselnde Film unempfindlich ist, und den Strichcode 3 beleuchtet. Nach Erreichen der Anschlaglage wird beispielsweise durch einen hierbei betätigbaren Schalter der Motor 20 für den Drehspiegel 18 eingeschaltet, so dass dieser sich (zweckmässig um 360°C) dreht und dabei fortlaufend die Striche des Strichcodes 3 auf die Leseroptik 21 und den Leser 22 abbildet. Das automatische Lesen erfolgt also nicht durch Hindurchbewegen des Strichcodes 3 unter dem Leser 21, 22, sondern bei in der Anschlaglage stillstehendem Code 3 und fest angeordnetem Leser 21, 22 über einen drehbaren Spiegel 18. Zweckmässigerweise wird der Antrieb 20 für den Spiegel 18 nach einer Umdrehung wieder automatisch auf irgendwie bekannte Weise abgeschaltet, so dass er bei Eingabe der nächsten Kassette 1 in das Gerät 2 wieder seine Ausgangsstellung einnimmt.

Nach dem automatischen Lesen des Strichcodes 3 einer Kassette 1 wird gemäss dem Code 3 das entsprechende Filmvorratsmagazin des Gerätes 2 bereitgestellt. Das Öffnen, Entladen, erneute Beladen, wieder Verschliessen und Bewegen einer Kassette 1 aus dem Gerät 2 kann dann auf eine der bekannten Arten erfolgen.

Es sind auch Be- und Entladegeräte bekannt, bei denen die Kassetten unterschiedlicher Formate nicht mit einer stirnseitigen Ecke 1b in Anschlag im Gerät gebracht werden, sondern bezüglich ihrer in Eingaberichtung 4 verlaufenden Längsmittellinie zentriert werden. In diesem Falle muss das Label 5 bei allen Kassetten unterschiedlicher Formate einen bestimmten Abstand von dieser Längsmittellinie haben. Die Lesevorrichtung muss dann entsprechend gegenüber der Mittellinie des Eingabeschachtes 2a ausgerichtet sein.

Bei Verwendung eines Strichcodelabels 3 für die Ermittlung der Kassettenformate in einem Gerät 2 ist noch von besonderem Vorteil, dass dieses zugleich als Anzeige für eine seitenverkehrte Eingabe einer Kassette in ein Gerät verwendbar ist, wenn der Leser so programmiert ist, dass er bei eingegebener Kassette und fehlendem Strichcode 3 ein Signal auslöst.

**Patentansprüche**

1. Für die automatische Be- und Entladung in einem Röntgenkassettenbe- und -entladegerät geeignete Röntgenfilmkassette, die auf einer ihrer Flachseiten Angaben über die Kassette und/oder den in ihr vorzusehenden oder vorgesehenen Blattfilm enthaltenden Strichcode in Form eines Labels aufweist, und für deren Be- und Entladung geeignetes Röntgenkassettenbe- und -entladegerät, in dem Kassetten unterschiedlicher Formate je lagemässig bezüglich der Eingaberichtung der Kassetten an derselben stirnseitigen Kassettenecke oder zentriert zur Mittellinie in Anschlag bringbar sind, dadurch gekennzeichnet, dass das Label (5) parallel zu einer der Kanten (1d, 1c), welche die in Anschlag bringbare Kassettenecke (1b) bilden, bzw. zu einer zur Mittellinie parallelen Kante angeordnet ist und seine Begrenzungen von den beiden diese Kassettenecke (1b) bildenden Kanten (1d, 1c) bzw. der Mittellinie und der Stirnseite vorbestimmte Abstände haben, dass eine bekannte optisch-elektronische Leseeinrichtung (21, 22) für Strichcodes (3), eine Beleuchtungseinrichtung (17) für das Label (5) und ein Drehspiegel (18) im Be- und Entladegerät (2) über dem Label jeweils einer in Anschlaglage befindlichen Kassette (1) angeordnet sind und dass der Drehspiegel (18) derart drehbar gelagert ist, dass bei seiner Drehung jeweils der gesamte Strichcode (3) des Labels (5) nacheinander auf die Leseeinrichtung abbildbar ist.

2. Be- und Entladegerät nach Anspruch 1, dadurch gekennzeichnet, dass als Drehspiegel (18) ein ebener Spiegel vorgesehen ist, dessen Drehachse parallel zu den Strichen des Strichcodes (3) angeordnet ist und dass die optische Achse der Leseeinrichtung (21, 22) parallel zum Strichcode (3) verläuft.

3. Be- und Entladegerät nach den Ansprüchen 1 oder 2, dadurch gekennzeichnet, dass durch die Leseeinrichtung (21, 22) eine Steuereinrichtung zur Auswahl eines das für eine eingegebene Röntgenfilmkassette (1) geeignete Filmformat enthaltenden Vorratsfilmmagazins in Betrieb setzbar ist.

4. Be- und Entladegerät nach einem der vorhergehenden Ansprüche, dadurch gekennzeichnet, dass ein bei Erreichen der Anschlagstellung einer Röntgenfilmkassette (1) betätigbarer Schalter vorgesehen ist, durch den die Beleuchtungseinrichtung (17) und die Leseeinrichtung (21, 22) einschaltbar und ein Antrieb (20) des Drehspiegels (18) in Gang setzbar sind, und dass die Beleuchtungseinrichtung (17) und die Leseeinrichtung (21, 22) und der Antrieb (20) nach einem für die Abtastung eines Labels (5) ausreichenden Winkelweg des Drehspiegels (18) abschaltbar sind.

## Claims

1. X-ray film cassette suitable for automatic loading and unloading in a device for loading and unloading X-ray cassettes, which cassette has, on one of its flat sides, a bar code in the form of a label containing details concerning the cassette and/or the sheet film provided or to be provided therein, and a device for loading and unloading X-ray cassettes which is suitable for loading and unloading said cassette, in which device cassettes of differing formats can each be brought to arrest, with respect to their position in relation to the direction of insertion of the cassettes, either at one and the same front cassette corner or in a centred position in relation ot the middle line, characterised in that the label (5) is arranged parallel to one of the edges (1a, 1c) forming the arrestable cassette corner (1b) or parallel to an edge which is parallel to the middle line, and its boundaries are at predetermined distance from the two edges (1d, 1c) forming the said cassette corner (1b) or from the middle line and from the front end, in that a known optoelectronic reading device (21, 22) for bar codes (3), an illuminating device (17) for the label (5) and a rotatable mirror (18) are arranged in the loading and unloading device (2) above the label of a respective cassette (1) situated in the arrested position and in that the rotatable mirror (18) is arranged rotatably in such a manner that as it turns the whole bar code (3) of the respective label (5) can be progressively projected on to the reading device.

2. Loading and unloading device according to Claim 1, characterised in that a flat mirror is provided as the rotatable mirror (18) whose axis of rotation is arranged parallel to the bars of the bar code (3) and in that the optical axis of the reading device (21, 22) is parallel to the bar code (3).

3. Loading and unloading device according to Claims 1 or 2, characterised in that a control device for selecting a supply film magazine containing the film format suitable for an inserted X-ray film cassette(1) can be set in operation by the reading device (21, 22).

4. Loading and unloading device according to one of the preceding claims, characterised in that a switch is provided which can be actuated when the arrest position of an X-ray film cassette (1) is reached, by means of which switch the illuminating device (17) and the reading device (21, 22) can be switched on and a drive (20) for the rotatable mirror (18) can be set in operation and in that the illuminating device (17) and the reading device (21, 22) and the drive (20) can be switched off after an angle range of the rotatable mirror (18) which is sufficient for scanning a label (5).

## Revendications

1. Cassette de film radiographique convenant au chargement et au déchargement automatique dans un appareil de chargement et de déchargement de cassettes radiographiques, qui présente sur l'une de ses faces plates un code à barres sous la forme d'une étiquette, contenant des indications relatives à la cassette et/ou au film en feuille à prévoir ou prévu dans celle-ci, et appareil de chargement et de déchargement de cassettes radiographiques convenant au chargement et au déchargement de la cassette, dans lequel des cassettes de format différent peuvent être amenées chacune en butée, en ce qui concerne la position par rapport au sens d'introduction des cassettes, contre le même angle frontal des cassettes ou de manière centrée par rapport à la ligne médiane, caractérisée en ce que l'étiquette (5) est disposée parallèlement à l'un des bords (1d, 1c) qui forment l'angle de cassette (1b) à amener en butée, ou à un bord parallèle à la ligne médiane, et en ce que ses délimitations par rapport aux deux bords (1d, 1c) formant cet angle de cassette (1b) ou par rapport à la ligne médiane et à la face frontale ont des distances telles qu'un dispositif de lecture optoélectronique (21, 22) connu pour codes à barres (3), un dispositif d'éclairage (17) pour l'étiquette (5) et un miroir tournant (18) sont disposés dans l'appareil de chargement et de déchargement (2) au-dessus de l'étiquette d'une cassette (1) se trouvant en position de butée, et en ce que le miroir tournant (18) est monté tournant de façon telle qu'à chacune de ses rotations, la totalité du code à barres (3) de l'étiquette (5) peut être reproduite successivement sur le dispositif de lecture.

2. Appareil de chargement et de déchargement selon la revendication 1, caractérisé en ce qu'il est prévu comme miroir tournant (18) un miroir plan dont l'axe de rotation est parallèle aux barres du code à barres (3) et en ce que l'axe optique du dispositif de lecture (21, 22) est parallèle au code à barres (3).

3. Appareil de chargement et de déchargement selon les revendications 1 ou 2, caractérisé en ce que le dispositif de lecture (21, 22) met en service un dispositif de commande pour la sélection d'un magasin de films contenant un format de film approprié à une cassette de films radiographiques (1) introduite.

4. Appareil de chargement et de déchargement selon l'une des revendications ci-dessus, caractérisé en ce qu'il est prévu un interrupteur actionnable lorsqu'est atteinte la position de butée d'une cassette de films radiographiques (1) permettant de mettre en marche le dispositif d'éclairage (17) et le dispositif de lecture (21, 22) ainsi qu'un mécanisme d'entraînement (20) du miroir tournant (18), et en ce que le dispositif d'éclairage (17) et le dispositif de lecture (21, 22) ainsi que le mécanisme d'entraînement (20) peuvent être coupés après un parcours angulaire du miroir tournant (18), suffisant pour la lecture d'une étiquette (5).